Europäisches Patentamt

European Patent Office

Office européen des brevets

(11) Publication number: **0 475 500 A1**

# EUROPEAN PATENT APPLICATION

(21) Application number: **91202186.2**

(22) Date of filing: **28.08.91**

(51) Int. Cl.5: **F25C 5/00**, G01P 13/02, H02P 7/00

(30) Priority: **12.09.90 IT 2143890**

(43) Date of publication of application: **18.03.92 Bulletin 92/12**

(84) Designated Contracting States: **AT BE CH DE DK ES FR GB GR IT LI LU NL SE**

(71) Applicant: **CASTEL MAC S.p.A.** Via del Lavoro, 9

I-31033 Castelfranco Veneto (Treviso)(IT)

(72) Inventor: **Portelli, Paolo** Via D'Acquisto 7 I-31021 Mogliano Veneto(Treviso)(IT)

(74) Representative: **Mittler, Enrico et al** c/o Marchi & Mittler s.r.l. Viale Lombardia, 20 I-20131 Milano(IT)

(54) **Electronic device for controlling the speed and direction of rotation of a motor for a machine for making ice chips.**

(57) The device comprises a first and a second magnetic sensor (1, 2) applied to a stator part (3) of the motor (40) to detect the passage of a magnet (5) fastened to a rotor part (4) of the motor (40) and to generate a first and a second series of impulses, respectively, wherein the distances and the phase displacement angles between two corresponding impulses of the first and of the second series are indicative of the speed and of the direction of rotation of said rotor part (4) of the motor (40). The device also comprises an electronic control circuit (6) which receives the first and the second series of impulses and that, should the speed drop and the direction of rotation of the motor (40) were possibly to take place, causes the operation of the machine to come to a halt for a given time, until normal operating conditions are restored.

Fig.2

The present invention relates to an electronic device for controlling the speed and direction of rotation of a motor for a machine for making ice chips.

According to the known art a machine for making ice chips comprises essentially a freezing chamber supplied with water from a hydraulic circuit, an evaporator of a refrigerating circuit associated with said chamber for cooling and consequently transforming into ice the water in said chamber and a motorized screw made to rotate inside said chamber for conveying the ice as it is formed toward a delivery mouth in the proximity of a container for collecting the ice.

For the correct formation of the ice it is important that the motor causing the screw to rotate should not slow down its rotation and even less invert its direction of rotation.

The object of the present invention is to accomplish an electronic device for controlling the speed and direction of rotation of a motor for a machine for making ice chips, that in case of a slow down or of an inversion of the direction of rotation of the motor shall stop the machine's operation.

According to the invention such object is attained with an electronic device for controlling the speed and direction of rotation of a motor for a machine for making ice chips, characterized in that it comprises a first and a second magnetic sensor applied to a stator part of said motor to detect the passage of a magnet fastened to a rotor part of said motor and to generate a first and a second series of impulses, respectively, wherein the distances and the phase displacement angles between two corresponding impulses of the first and of the second series are indicative of the speed and of the direction of rotation of said rotor part of the motor, and an electronic control circuit which receives said first and said second series of impulses and that, should the speed drop and the direction of rotation of the motor were possibly to take place, causes the operation of the machine to come to a halt until normal operating conditions are restored.

In this way it is possible to overcome the motor's operating drawbacks with consequent alteration of the rotation transmitted to the screw and thus having the ice stagnate in the freezing chamber.

The features of the present invention shall be made more evident by an embodiment illustrated as a non-limiting example in the enclosed drawings, wherein:

Fig. 1 shows diagrammatically an ice-making machine with the control device according to the invention;

Fig. 2 shows the principle diagramme of the control device according to the invention;

Fig. 3 is a functional block diagramme of the electronic control circuit included in the device illustrated in Fig. 2;

Fig. 4 is a plan view from above of the control device applied to the stator part of the motor driving the screw in an ice-making machine;

Fig. 5 illustrates the signals transmitted to the electronic circuit of Fig. 3 by the detection sensors applied to the stator part of the motor.

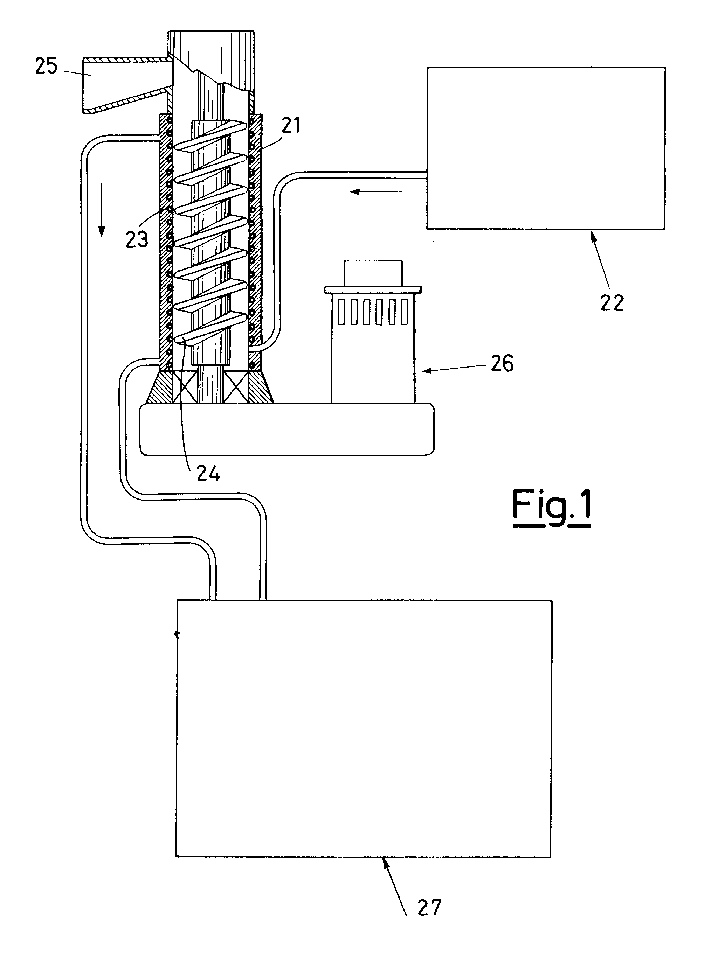

With reference to Fig. 1, there is shown a machine for making ice chips that comprises a freezing chamber 21 supplied with water from a hydraulic circuit 22, an evaporator 23 of a refrigerating circuit 27 associated with the chamber 21 for cooling and consequently transforming into ice the water in the chamber 21, a motorized screw 24 made to rotate inside the chamber 21 for conveying the ice as it is formed toward a delivery mouth 25 in the proximity of a container for collecting the ice, not shown, and a motorization unit 26 of the screw 24.

With reference to Fig.s 2 and 4, the motorization unit 26 of the screw 24 comprises a motor 40 that has a rotor part 4 to which there is applied a magnet 5 and a stator part 3 to which there are applied a first and a second sensor 1, 2, in the specific case, Hall sensors, for detecting the passage of the magnet 5 during the rotation of the rotor part 4 with respect to the stator part 3.

The sensors 1 and 2 are connected to an electronic circuit 6 for controlling the speed and direction of rotation of the rotor part 4.

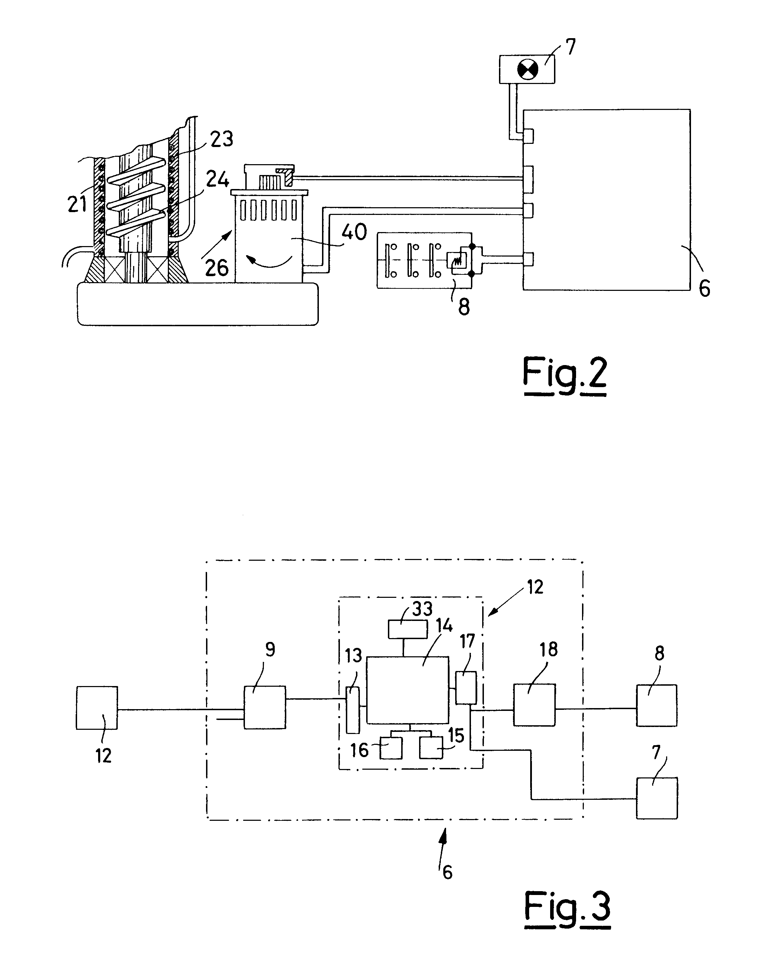

With reference to Fig. 3, the electronic control circuit 6 comprises a comparator 9 across an input of which there are applied voltage impulses from the first and from the second sensor 1, 2 to be compared with a reference voltage present across its other input.

In cascade to the comparator 9 there is a microprocessor 12, which comprises an input register 13 for the temporary storage of the values at the outputs from the comparator 9, a RAM memory 15 in which the digital values from the register 13 are stored, an EPROM memory 16 in which the program data indicative of the optimum speed of the motor and of its direction of rotation have previously been stored, a central processing unit 14 suitable for making the comparison between the digital values in the RAM memory 15 and in the EPROM 16 and an output register 17 for storing the result of the comparison made by the unit 14. Inside the microprocessor 12 there is also a timer 33 which has the object of delaying by a predetermined length of time the re-activation of the machine when the correct conditions of speed and direction of rotation of the motor have been restored. To the output from the microprocessor 14 there are connected the optical signal unit 7 and a power circuit 18 suitable for operating the machine's power unit 8.

With reference to Fig.s 2, 3 and 4 the operation of the device according to the present invention is as follows.

The hydraulic circuit 22 supplies water to the freezing chamber 21 for its transformation into ice thanks to the evaporator 23. The screw 24 made to rotate by the motorization unit 26 pushes the ice as it is formed towards the delivery mouth 25.

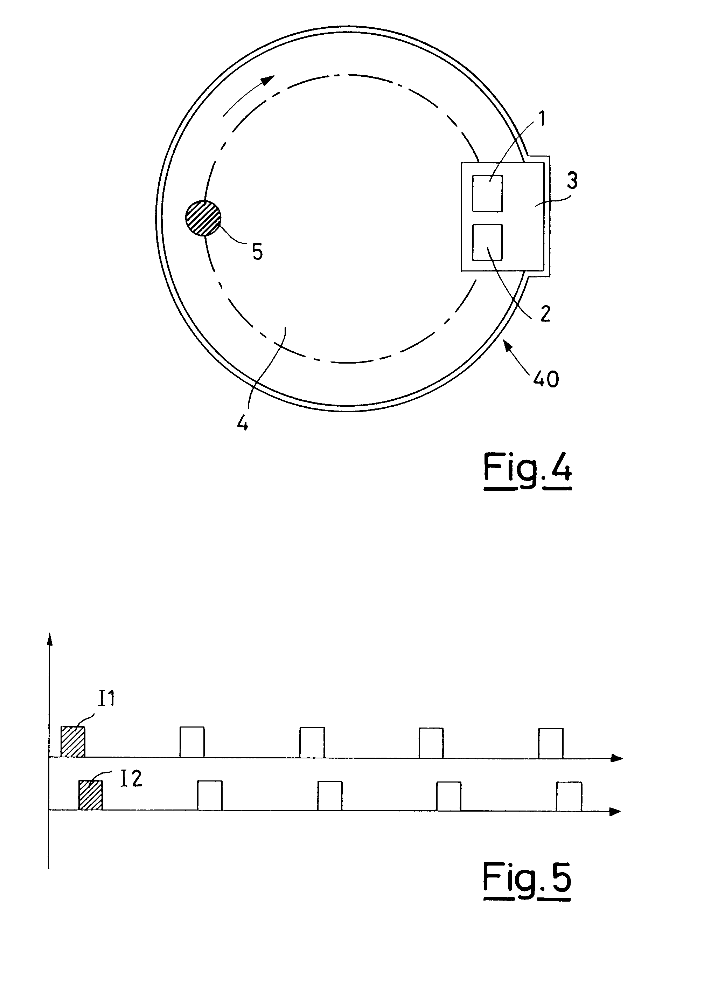

Due to the effect of the rotation of the rotor part 4 with respect to the stator part 3, the magnet 5 passes in succession under the sensors 1 and 2. The latter generate a first and a second series of impulses I1, I2, respectively, represented in Fig. 5, where the x-axis indicates the times at which the impluses themselves are generated. Each impluse passes through the comparator 9, where it is compared with the reference voltage present across its other input, and is then introduced into the input register 13 of the microprocessor 12 to then pass into the RAM 15 and be compared through the processing unit 14 with the program data previously stored in the EPROM. On the basis of the distances and of the phase displacement angles between successive impulses, the processing unit 14 is in a position of detecting changes in the speed and direction of rotation of the rotor part 4 with respect to the stator part 3. In this case the processing unit 14 sends a signal that causes the signal unit 7 to start flashing and, through the power circuit 18 and the power device 8, the instantaneous stoppage of the machine's operation. At the same time, inside the microprocessor 12 the timer 33 is started and, after a given time, say, equal to a few hours, it causes the re-activation of the machine's operation.

It should be noted that when the machine is restarted the timer 33 prevents for a given time any comparison from being made between the digitalized values originating from the sensors 1 and 2 and the program data stored in the EPROM 16 to allow the moving parts to reach operating speeds.

## Claims

1. Electronic device for controlling the speed and direction of rotation of a motor for a machine for making ice chips, characterized in that it comprises a first and a second magnetic sensor (1, 2) applied to a stator part (3) of said motor (40) to detect the passage of a magnet (5) fastened to a rotor part (4) of said motor (40) and to generate a first and a second series of impulses, respectively, wherein the distances and the phase displacement angles between two corresponding impulses of the first and of the second series are indicative of the speed and of the direction of rotation of said rotor part (4) of the motor (40), and an electronic control circuit (6) which receives said first and said second series of impulses and that, should the speed drop and the direction of rotation of the motor (40) were possibly to take place, causes the operation of the machine to come to a halt until normal operating conditions are restored.

2. Device according to claim 1, characterised in that said electronic control circuit (6) comprises a comparator (9) across an input of which there are applied voltage impulses from the first and from the second sensor (1, 2) to be compared with a reference voltage present across its other input.

3. Device according to claim 2, characterised in that in cascade to the comparator (9) there is a microprocessor (12) suitable for checking the condition corresponding to changes in the speed and the direction of rotation of the motor (40) and to operate a power circuit (18) for stopping the machine's operation.

4. Device according to claim 3, characterised in that the microprocessor (12) comprises an input register (13) for the temporary storage of the signals at the outputs from the comparator (9), a RAM memory (15) for storing the digital signals introduced into said register (13), an EPROM memory (16) for storing the program data related to the correct conditions of speed and direction of rotation of the motor, a processing unit (14) suitable for making the comparison between said digital signals stored in the RAM memory (15) and said program data stored in the EPROM (16) and an output register (17) for storing the result of said comparison.

5. Device according to claim 3, characterised in that said microprocessor (12) is provided with a timer (33) that can be activated when the machine's operation is brought to a halt and suitable for operating the re-activation of the machine's operation with a given delay, so as to allow the machine to return to normal conditions.

## Fig.1

## Fig.2

## Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | ELECTRONICS INTERNATIONAL, vol. 53, no. 19, August 1980, page 176, New York, US; A.L. EQUIZABAL: "Hall-effect tachometer senses speed, direction of rotation" * The whole document * <br> – – – | 1 | F 25 C 5/00 <br> G 01 P 13/02 <br> H 02 P 7/00 |
| Y | EP-A-0 380 707 (FANUC LTD) * Abstract * | 1 | |
| A | – – – | 3 | |
| A | CH-A-554 029 (McQUAY PERFEX INC.) * Page 1, lines 1-32 * <br> – – – | 1 | |
| A | PATENT ABSTRACTS OF JAPAN, vol. 8, no. 142 (E-254)[1579], 3rd July 1984; & JP-A-59 50 784 (MATSUSHITA DENKI SANGYO K.K.) 23-03-1984 * The whole document * <br> – – – | 1,3 | |
| A | EP-A-0 296 699 (MATSUSHITA ELECTRIC INDUSTRIAL CO., LTD) * Figure 1 * <br> – – – | 4 | TECHNICAL FIELDS SEARCHED (Int. Cl.5) |
| A | US-A-4 228 396 (PALOMBO et al.) * Figure 1 * <br> – – – – – | 2 | F 25 C <br> G 01 P <br> H 02 P |

The present search report has been drawn up for all claims

| Place of search | Date of completion of search | Examiner |
|---|---|---|
| The Hague | 05 November 91 | BOURBON R.P.S. |